# EUROPÄISCHE PATENTANMELDUNG

(11) **EP 1 070 632 A2**
(43) Veröffentlichungstag der Anmeldung: **24.01.2001**
(21) Anmeldenummer: 00113960.9
(22) Anmeldetag: 01.07.2000
(51) Int. Cl.: B60Q 1/00, B60Q 1/06

(54) **Fahrzeugscheinwerfer**

(30) Priorität: 23.07.1999 DE 29912869 U
(71) Anmelder: Hella KG Hueck & Co., 59552 Lippstadt (DE)
(72) Erfinder: Niedenzu, Thomas, 59302 Oelde (DE); Peters, Oliver, 59557 Lippstadt (DE)

(57) **Zusammenfassung**

Eine Reflektoreinheit (2) eines Fahrzeugscheinwerfers ist in einem Gehäuse (1) um eine Vertikal(5)- und eine Horizontalachse (4) verschwenkbar gelagert. Ein elastisches Dämpfungselement (3) oder ein mit dem Dämpfungselement (3) zusammenwirkender Träger (6) der Reflektoreinheit (2) ist an der Reflektorseite der Reflektoreinheit (2) auf der im wesentlichen horizontal verlaufenden Horizontalachse (4) in einem von einem verstellbaren Lagerpunkt (7) zu einem über einen festen Lagerpunkt (8) hinausgehenden Bereich angeordnet.

## Beschreibung

Die Erfindung betrifft einen Fahrzeugscheinwerfer mit einer in einem Gehäuse um eine Horizontalachse und um eine Vertikalachse verschwenkbaren Reflektoreinheit und mit einem elastischen Dämpfungselement zwischen Reflektoreinheit und Gehäuse.

Aus der DE 0 626 293 B 1 ist ein Fahrzeugscheinwerfer bekannt, der eine in einem Gehäuse verschwenkbar angeordnete Reflektoreinheit aufweist. Die Reflektoreinheit ist dabei um eine etwa horizontal angeordnete Horizontalachse und um eine etwa vertikal angeordnete Vertikalachse verschwenkbar. An ihrem in Abstrahlrichtung angeordneten vorderen Ende weist die Reflektoreinheit einen umlaufenden Rand auf, der von einer umlaufenden Dichtung umschlossen und gegenüber dem benachbarten Gehäuse abgedichtet wird. Die umlaufende Dichtung wirkt dabei als Dämpfungselement.

Nachteilig bei dem bekannten Scheinwerfer ist, daß das Dämpfungselement relativ aufwendig zu montieren ist.

Weiterhin nachteilig ist, daß in Abhängigkeit von bauraumbedingten Vorgaben eine Aufnahme bzw. Anbindung des Reflektors um den kleineren Fernlichtteil nicht schwerpunktorientiert vorgenommen werden kann. Der hieraus resultierende außermittig liegende Schwerpunkt kann dann ein Auslenken des größeren Abblendlichtbereiches bewirken, insbesondere nämlich dann, wenn die Dämpfung der umlaufenden Dichtung relativ gering ist, Im nahen Resonanzbereich kann es dann zu einer unzulässigen Lichtbandaufweitung, Ausknöpfen des Reflektors oder gar zum Bruch kommen. Ist die Dämpfung jedoch so stark, daß ein Auslenken des größeren Abblendlichtbereiches vermieden wird, muß ein Stellmotor zu einer Vertikalverstellung die relativ hohen Dämpfungskräfte überwinden.

Aufgabe der vorliegenden Erfindung ist es daher, den bekannten Scheinwerfer so zu verbessern, daß das Dämpfungselement einfach zu montieren ist, und daß bei ausreichender Dämpfung die Dämpfungskräfte, die der Steilmotor zur Vertikalverstellung zu überwinden hat, möglichst gering sind.

Diese Aufgabe wird erfindungsgemäß in Verbindung mit dem Oberbegriff des Anspruches 1 dadurch gelöst, daß das Dämpfungselement oder ein mit dem Dämpfungselement zusammen wirkender Träger der Reflektoreinheit an der Rückseite der Reflektoreinheit auf der im wesentlichen horizontal verlaufenden Horizontalachse in einem von einem verstellbaren Lagerpunkt zu einem über einen festen Lagerpunkt hinausgehenden Bereich angeordnet ist.

Dadurch, daß das Dämpfungselement auf der im wesentlichen horizontal verlaufenden Horizontalachse angeordnet ist, die als Drehachse für die Vertikalverstellung dient, liegt die Drehachse annähernd in Dämpfungsmitte, so daß ein Stellmotor der Vertikalverstellung praktisch keine zusätzlichen Kräfte des Dämpfungsgummis zu überwinden hat. Zudem läßt sich das Dämpfungselement relativ einfach und kostengünstig montieren.

Gemäß einer bevorzugten Ausführungsform der Erfindung ist das Dämpfungselement als ein faltenbalgähnlicher Stoßdämpfer ausgebildet, der Walkbewegungen der horizontalen und vertikalen Verstellung kompensiert.

Nach einer weiteren bevorzugten Ausführungsform der Erfindung ist das Dämpfungselement an einem gehäuseseitigen freien Ende eines an der Reflektoreinheit angeordneten zapfenförmigen Trägers angeordnet. Das Dämpfungselement ist mit seinem dem Reflektor abgewandten hinteren Ende mit einem umlaufenden Rand einer Gehäuseöffnung verbindbar.

Durch die Anordnung des Dämpfungselementes an einem Ende eines Trägers läßt sich das Dämpfungselement relativ einfach mit der Reflektoreinheit verbinden. Ebenso einfach läßt sich das Dämpfungselement mit dem Rand der Gehäuseöffnung verbinden. Auch ist es beispielsweise möglich, das Dämpfungselement von außen über die Gehäuseöffnung einzusetzen. Es ist aber grundsätzlich auch möglich, das Dämpfungselement von innen her mit dem Gehäuse zu verbinden.

Nach einer weiteren bevorzugten Ausführungsform der Erfindung ist das Dämpfungselement aus einem Weichgummi ausgebildet. Durch die Verwendung eines Weichgummis können die auf einen eventuell vorhandenen Stellmotor wirkenden Kräfte weiter verringert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

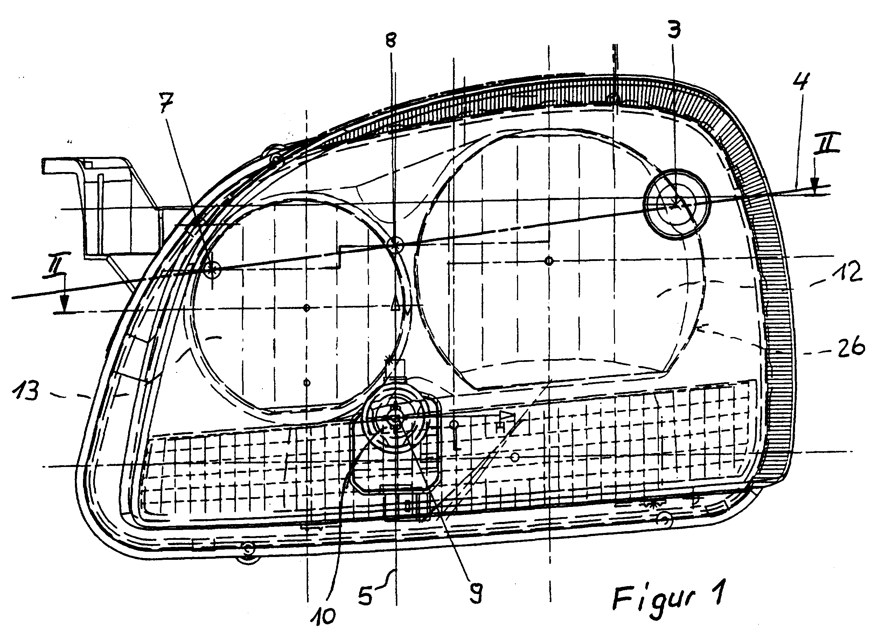

- Figur 1:: Eine Vorderansicht eines Scheinwerfers mit angedeuteten Drehachsen und Lagerpunkten der Reflektoreinheit,

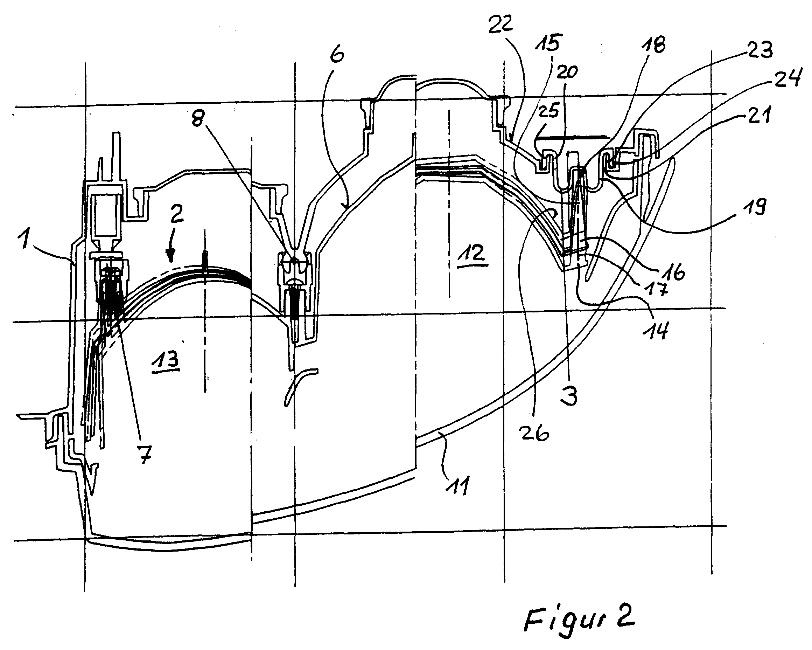

- Figur 2:: eine Draufsicht auf den Scheinwerfer von Figur 1 entlang der Linie II - II geschnitten und

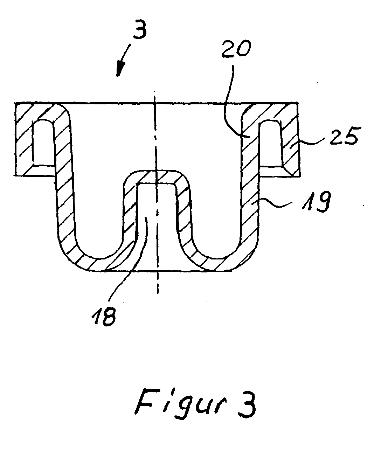

- Figur 3:: eine Seitenansicht eines Dämpfungselementes im Schnitt und in vergrößerter Darstellung.

Ein Scheinwerfer besteht im wesentlichen aus einem Gehäuse 1, einer Reflektoreinheit 2 und einem Dämpfungselement 3.

Die Reflektoreinheit 2 ist in dem Gehäuse 1 um eine im wesentlichen horizontal verlaufenden Horizontalachse 4 und um eine Vertikaldrehachse 5 verschwenkbar gelagert. Zu diesem Zweck weist die Reflektoreinheit 2 an ihrer Rückseite 6 einen ersten verstellbaren Lagerpunkt 7 und einen festen Lagerpunkt 8 auf, die auf der etwa horizontal angeordneten Horizontalachse 4 angeordnet sind.

Ein dritter Lagerpunkt 9 ist auf der etwa vertikal angeordneten Vertikalachse 5 gemeinsam mit dem festen Lagerpunkt 8 angeordnet. Der dritte Lagerpunkt 9 ist von einem Stellmotor 10 einer Vertikalverstellung zur Leuchtweitenregulierung verstellbar, so daß die Reflektoreinheit 2 um die Horizontalachse 4 verschwenkt werden kann.

Das Gehäuse 1 wird in Abstrahlrichtung des Fahrzeugscheinwerfers von einer Streuscheibe 11 bzw. einer transparenten Abdeckscheibe abgedeckt. Die Reflektoreinheit 2 weist einen Abblendreflektor 12 und einen benachbarten kleineren Fernlichtreflektor 13 auf. Die Anbindung, insbesondere des Fernlichtreflektors 13 erfolgt dabei nicht schwerpunktorientiert, so daß der Schwerpunkt der Reflektoreinheit 2 außermittig angeordnet ist.

Das Dämpfungselement 3 ist auf der Horizontalachse 4 in einem von dem ersten verstellbaren Lagerpunkt 7 zu einem über den zweiten festen Lagerpunkt 8 hinausgehenden Bereich nahe eines Reflektorrandes 14 an einem freien Ende 15 eines zapfenförmigen Trägers 16 angeordnet. Der Träger 16 weist eine Längsachse 17 auf, die etwa in Abstrahlrichtung bzw. etwa parallel zu einer nicht dargestellten Längsachse des Fahrzeugscheinwerfers verläuft.

Das Dämpfungselement 3 ist als ein faltenbalgähnlicher Stoßdämpfer ausgebildet und weist mittig eine topfförmige Einbuchtung 18 auf, in die das freie Ende 15 des Trägers 16 eingreift. Am reflektorseitigen Ende der topfförmigen Einbuchtung 18 geht diese in ein topfförmiges Außenteil 19 über, das zum Gehäuse 1 hin geöffnet ist, und das mit seinem dem Gehäuse 1 zugewandten freien Ende 20 in eine benachbarte Gehäuseöffnung 21 des Gehäuses 1 hineinragt. Die Gehäuseöffnung 21 weist auf der der Reflektoreinheit 2 abgewandten Rückseite 22 des Gehäuses 1 einen umlaufenden Rand 23 auf, der die innere Begrenzung einer Nut 24 bildet. In die Nut 24 greift das freie Ende 20 des topfförmigen Außenteiles 9 mit einem rückwärts in Richtung Reflektoreinheit 2 umgeschlagenen Rand 25 ein. Das Dämpfungelement 3 bzw. der Dämpfungsgummi absorbiert die Schwingungen des benachbarten Abblendreflektors 12, so daß es insbesondere im nahen Resonanzbereich nicht zu einer unzulässigen Lichtbandaufweitung, Ausknöpfen bzw. Lösen der Reflektoreinheit 2 oder zum Bruch kommen kann. Sämtliche Walkbewegungen der horizontalen und vertikalen Verstellung werden durch das Dämpfungselement 3 kompensiert.

## Patentansprüche

1. Fahrzeugscheinwerfer mit einer in einem Gehäuse um eine Vertikaldrehachse und um eine Horizontaldrehachse verschwenkbaren Reflektoreinheit und mit einem elastischen Dämpfungselement zwischen Reflektoreinheit und Gehäuse, dadurch gekennzeichnet, daß das Dämpfungselement (3) oder ein mit dem Dämpfungselement (3) zusammen wirkender Träger (16) der Reflektoreinheit (2) an der Rückseite der Reflektoreinheit (2) auf der im wesentlichen horizontal verlaufenden Horizontalachse (4) in einem von einem verstellbaren Lagerpunkt (7) zu einem über einen festen Lagerpunkt (8) hinausgehenden Bereich angeordnet ist.

2. Fahrzeugscheinwerfer nach Anspruch 1, dadurch gekennzeichnet, daß das Dämpfungselement (3) in einem einen Reflektorrand (14) benachbarten äußeren Reflektorbereich (26) angeordnet ist.

3. Fahrzeugscheinwerfer nach Anspruch 1 oder 2, dadurch gekennzeichnet, daß das Dämpfungselement (3) als ein faltenbalgähnlicher Stoßdämpfer ausgebildet ist, der Walkbewegungen der horizontalen und vertikalen Verstellung kompensiert.

4. Fahrzeugscheinwerfer nach einem der Ansprüche 1 bis 3, dadurch gekennzeichnet, daß das Dämpfungselement (3) an einem gehäuseseitigen freien Ende (15) eines an der Reflektoreinheit (2) angeordneten zapfenförmigen Trägers (16) angeordnet ist.

5. Fahrzeugscheinwerfer nach Anspruch 4, dadurch gekennzeichnet, daß das Dämpfungselement (3) mit seinem der Reflektoreinheit (2) abgewandten hinteren Ende mit einem umlaufenden Rand (23) einer Gehäuseöffnung (21) verbindbar ist.

6. Fahrzeugscheinwerfer nach einem der Ansprüche 1 bis 5, dadurch gekennzeichnet, daß das Dämpfungselement (3) aus einem Gummimaterial ausgebildet ist.

7. Fahrzeugscheinwerfer nach Anspruch 6, dadurch gekennzeichnet, daß das Dämpfungselement (3) aus einem Weichgummi ausgebildet ist.

8. Fahrzeugscheinwerfer nach einem der Ansprüche 1 bis 7, dadurch gekennzeichnet, daß die Reflektoreinheit (2) einen ersten Reflektor als Abblendreflektor (12) und einem zweiten kleineren Reflektor als Fernlichtreflektor (13) aufweist.

9. Fahrzeugscheinwerfer nach einem der Ansprüche 1 bis 8, dadurch gekennzeichnet, daß die Reflektoreinheit (2) einen außermittig liegenden Schwerpunkt aufweist.

10. Fahrzeugscheinwerfer nach einem der Ansprüche 1 bis 9, dadurch gekennzeichnet, daß die Reflektoreinheit (2) zur Leuchtweitregulierung von einem Stellmotor (10) um die Horizontalachse (4) verschwenkbar ist.
